# EUROPEAN PATENT SPECIFICATION

(11) **EP 3 252 236 B1**
(45) Date of publication and mention of the grant of the patent: **13.03.2019**
(21) Application number: 17176614.0
(22) Date of filing: 08.05.2013
(51) Int. Cl.: E02F 3/18, E02F 5/10, F16L 1/032, G02B 6/50, G06Q 10/04, G06F 17/50, H02G 1/06, H02G 9/02, E02F 5/08, E02F 5/14, E02F 9/20

(54) **METHOD FOR PLACEMENT OF DUCTS/CABLES AND DEVICE FOR PLANNING PLACEMENT THEREOF**
VERFAHREN ZUR PLATZIERUNG VON LEITUNGEN/KABELN UND VORRICHTUNG ZUR PLANUNG DER PLATZIERUNG DAFÜR
PROCÉDÉ DE PLACEMENT DE CONDUITS/CÂBLES ET DISPOSITIF DE PLANIFICATION DE LEUR PLACEMENT

(30) Priority: 10.05.2012 SE 1250479
(43) Date of publication of application: 06.12.2017
(62) Divisional of application: 13787960.7
(73) Proprietor: DellCron Innovation AB, 126 14 Stockholm (SE)
(72) Inventor: GUSTAVSSON, Conny, 129 45 Hägersten (SE); HULTMAN, Hasse, 136 43 Handen (SE); EDERYD, Johnny, 162 44 Vällingby (SE)
(74) Representative: Heimdal, Pär

(56) References cited:
- EP-A1- 2 098 095
- CN-A- 102 314 536
- FR-A1- 2 898 689
- JP-A- 2005 352 764
- US-A- 4 677 555
- US-A- 5 329 464
- US-A- 5 960 570

## Description

### Technical Field

The present invention relates to a method for placement of ducts/cables in a geographical area. More specifically, the invention relates to a method according to claim 1. Furthermore, the invention also relates to a computer program, a computer program product, a device and a system thereof.

### Background of the Invention

The expansion of fibre optic networks for communication in residential areas is often hampered by the high cost of excavation and restoration of the road layer, such as asphalt or concrete. A typical residential connection may cost approximately EUR 3 000 plus VAT, and hence many homeowners are reluctant to make such an investment. This in turn means that the connection rate for houses is low when a residential area is built, which further increases the cost of connecting. The reason for this is that the cost for the backbone is more or less independent of the connection rate, and a low connection rate means that fewer houses will have to bear the total cost for the backbone.

An alternative, to provide house connections through green open spaces at the back of houses is in most cases not possible. Certainly, this would make the costs considerably lower as it may even be possible to plough down channelling tubing/ducts for fibre cables but this often involves crossing gardens in the homes of people not wanting to connect. There is also the question of flowerbeds, bushes and trees, which can be costly to replace/restore. Finally, it would probably be an enormous task to arrange permission from all the homeowners affected if this method should be employed.

For placement of ducts/cables Micro Trenching is expected to become the dominating method for building Fiber-To-The-Home (FTTH) in areas with detached or semidetached houses. In Sweden around 400 000 houses are expected to be connected to a fiber network during the next 5 - 10 years. The world market is enormous and may be estimated to around 100 - 500 times the Swedish market. This means that somewhere between 40 million to 200 million houses may be connected during the next 20 years.

The planning, sawing of trenches for ducts/cables as well as the actual placement of ducts/cables is a complicated task and involves high investment costs. Therefore, it is critical how trenches and placement of ducts/cables is planned and deployed in different geographical areas. Prior art include a planning tool as represented in US5329464 A, whereas FR2898689 A1 discloses a trencher receiving data.

### Summary of the Invention

An object of the present invention is to provide a control method which fully or in part solves the problems of prior art solutions. Another object is to provide an effective method for planning and placing ducts/cables in a geographical area.

According to an aspect of the invention the above mentioned objects are achieved by a method for placement of ducts/cables in a geographical area, said method according to claim 1.

Embodiments of the method above are defined in the appended dependent method claims. The invention also relates to a computer program and a computer program product.

The solution according to the present invention makes the planning of trenches for ducts/cables fast and cost effective. Also, the actual placement of ducts/cables in the trenches can be made with high precision and at a low cost since the use of a topology of the present invention makes it possible to plan the work in an efficient manner regarding production capacity used, such as amount of ducts/cables, number of sawing machines needed for a project, etc.

Other advantages and applications of the present invention will be apparent from the following detailed description of the invention.

### Brief Description of the Drawings

The appended drawings are intended to clarify and explain the present invention, in which:
- Figure 1 shows a sawing machine with its sawing blade/disc cutter and a stabilizing device for placing ducts/cables immediately behind the sawing disc;
- Figure 2 shows the sawing machine where the stabilizing device is adapted for placing a plurality of ducts/cables at the same time while maintaining the order of the ducts/cables in the micro trench; and
- Figure 3 shows in detail where to cut the top duct so that it will be long enough to reach its final destination;

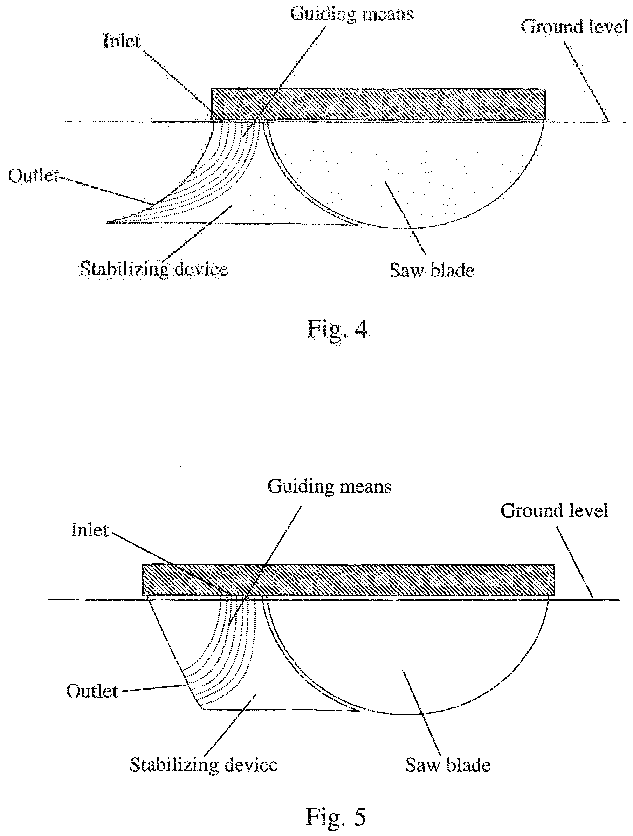

- Figures 4-6 shows further embodiments of the stabilizing device (the channels are only illustrated in figures 4-6 and should therefore not be seen as true representations);
- Figures 7-9 illustrates different data flows in a system;
- Figure 10 illustrates a work order; and
- Figures 11-13 illustrates the generation of a topology according to the invention.

### Detailed Description of the Invention

To achieve the above and further objects, the present method relates to a method for placement of ducts/cables in a geographical area. The present method uses a topology comprising one or more links and one or more nodes. Each node is a starting point and/or an end point for a link, and each node is associated with information about which links the specific node is connected to. Each link represents a trench and has a starting point and an end point connected to a node, respectively, and each link is associated with information about which nodes the specific link is connected to. The method comprises the steps of: placing links in a representation of a geographical area and interconnecting the links by means of nodes so as to generate a topology comprising of nodes and links; and using the topology for placement of ducts/cables in the geographical area. Also, each node may further be associated with information about the main trenches and the branch trenches the node is connected to.

By using the defined links and nodes a topology is generated by which planning and placement of trenches and ducts/cables can be performed. The representation of a geographical area can e.g. be a computer representation displayed on a screen as a map and/or being a logical representation in a data base.

Preferably, the topology generated by the present method is used for projecting/planning placement of ducts/cables and hence the step of using involves: using the associated information of the nodes and links for projecting placement of ducts/cables in the geographical area.

According to another embodiment the step of using involves: indicating a first node and a second node of the topology; and generating a shortest route between the first and second nodes via one or more nodes and one or more links of the topology. The shortest route can be obtained by using an optimisation algorithm.

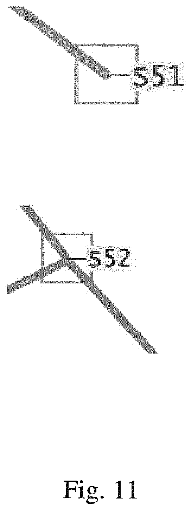

Accordingly, a designer may use a software module to design/project new trenching and placement of ducts/cables. The work of the designer is interactive and the first step is to create a trenching network comprising trench-links (links) and trench-nodes (nodes). As mentioned above, a link is a trench in the ground. The link has a start and a stop point/location. Each start and stop location also consist of a node. A node is associated with information about "events" at that specific node. Example of events may be: a trench (line) starts in node S51 in the example in figure 11; or a trench is split up into two trenches in the example below (three trench links "meet" in trench-node S52).

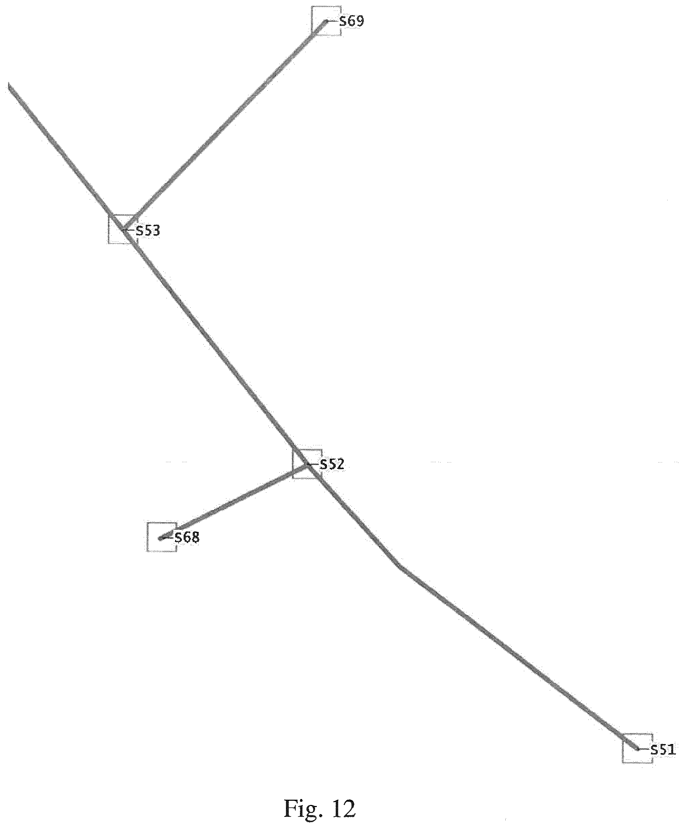

Hence, in this way a trench network is built up as illustrated in figure 12. Each link knows which node/nodes the link is connected to. The result is a mathematic topology.

Further, a duct-network consists of wells, cabinets (duct-nodes), ducts/tubes (duct-links), etc. Firstly, the duct-nodes (wells, cabinets) is created and placed in spatial locations in the geographic area.

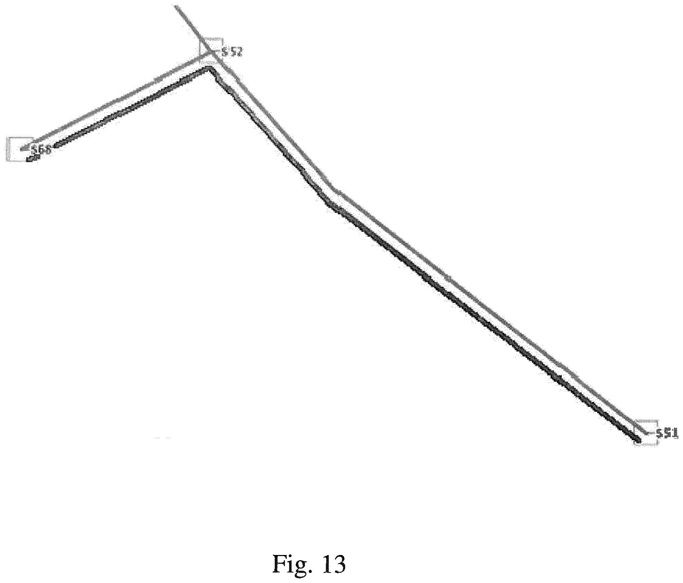

Next step in the workflow of duct-network creation is to design ducts/tubes that are running from one trench-node to any other desired trench-node in the topology. The duct can pass a number of trench nodes on the way from a start node to a stop node. The designer point out the start and stop node and the system automatically traces the shortest way within the trench-network from the start-node to the stop-node. Example: point/mark out trench-nodes S51 and S68 in figure 13, and the system traces the shortest way from S51 to S68 in the topology and automatically creates a duct (dark black line). Therefore, the designer does not need to explicit point out the intermediate breakpoints/nodes between the start and stop nodes.

The designer reuses/inherits the trench network during automatic trace of a path where to place a duct. If there are alternative ways in the topology, the shortest way is selected. A mathematical algorithm (e.g. a suitable optimization algorithm) calculates this and possibly more alternatives - although the shortest is selected. The process of creating the trench and duct network is done efficient due to the semi-automatic approach. The system automatically searches for any existing duct nodes in the start/stop point of the duct link and automatically connects any duct nodes to the duct link. A mathematical topology is created in the duct-network.

Finally, the designer generates one or more first work orders comprising an assembled logic regarding what is needed in the saw machine client on board the computer of the sawing machine.

Moreover, according to yet another embodiment of the invention the method comprises the steps of: generating at least one first work order for a sawing machine based on the shortest route; and transmitting a first data flow A comprising the first work order to the sawing machine. The information is preferably transmitted by using any suitable wireless communication technique.

The sawing machine is of the kind having computer/processing means and communication means for receiving and processing the first work order. The machine is also arranged for sawing trenches in an area. The first work order is provided by a device comprising: a server unit having computer/processing means, communication means and a first data base, said first data base including positioning data.

The controlling may according to an embodiment of the invention involve: sawing, by the sawing machine, at least one trench in the area according to the first work order. Hence, the first data flow A preferably comprises position data related to the first work order. The position data contains information e.g. in X-, Y-, Z-coordinates where the sawing of the trench should be performed, i.e. the shortest route. Hence, it should be noted that the Z-coordinates to represent the depth of the trench to be sawn, X-coordinates represents longitude and Y-coordinates represents latitude.

Therefore, when the sawing machine receives the first work order it process it and starts to saw trenches according to the first type of work order. The sawing machine may be controlled by an operator which is instructed e.g. by means of display means (screen) mounted on the sawing machine. Hence, the first work order comprises position data so that the machine is instructed to saw trenches in the right positions of the geographical area.

Furthermore, according to another embodiment of the invention the first work order may also comprises information about number of ducts/cables to be placed, an internal order of said ducts/cables, and where (in what position) said ducts/cables should be cut.

According to yet another embodiment of the invention the sawing machine further comprises a positioning receiver such as a precision GPS, and the method further comprises the steps of: transmitting, by the sawing machine, a second data flow (B) comprising positioning data for the sawing machine to the server unit, and updating the first data base with the second data flow (B).

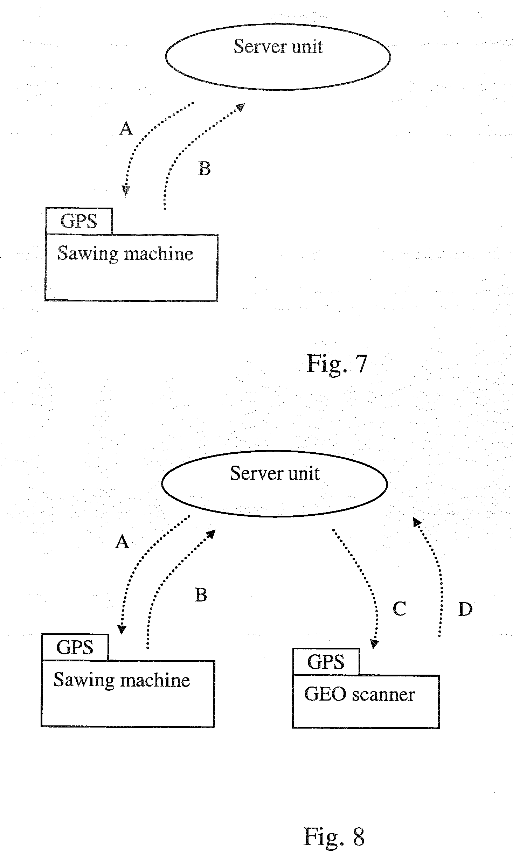

This embodiment is illustrated in figure 7. As seen in the figure a first data flow A is transmitted from the server unit to the sawing machine while a second data flow B is transferred in the opposite direction. The system can in this embodiment keep track of the exact position of the sawing machine. The positioning can also be used to lead staff to the right place and to control the entities in the system such as sawing machines. The position determination is also a safety feature in that it can accurately tell where a person like operator, installer or inspector is if an accident should occur.

All positioning data is sent to the server unit via suitable communication systems. When communication is not possible (e.g. when the communication is down or if there is lack of coverage) the positioning data and other relevant information can be stored in the computer means (or associated memory means) that is connected to the GPS receiver and transmitted when communicating is possible. Precise positioning in the X-, Y- and Z-coordinates is central to the automatic real-time documentation of the present invention. Geographic Information System (GIS/GIT) which is the software that computes the spatial data allows a traceability and precision with millimetre accuracy.

The second data flow B may also comprise receipt data corresponding to the first work order so that the system can keep track of how, and where the different work orders are performed. Hence, the receipt data relates to the positioning data of the sawing machine which means that for each receipt a position is recorded and stored.

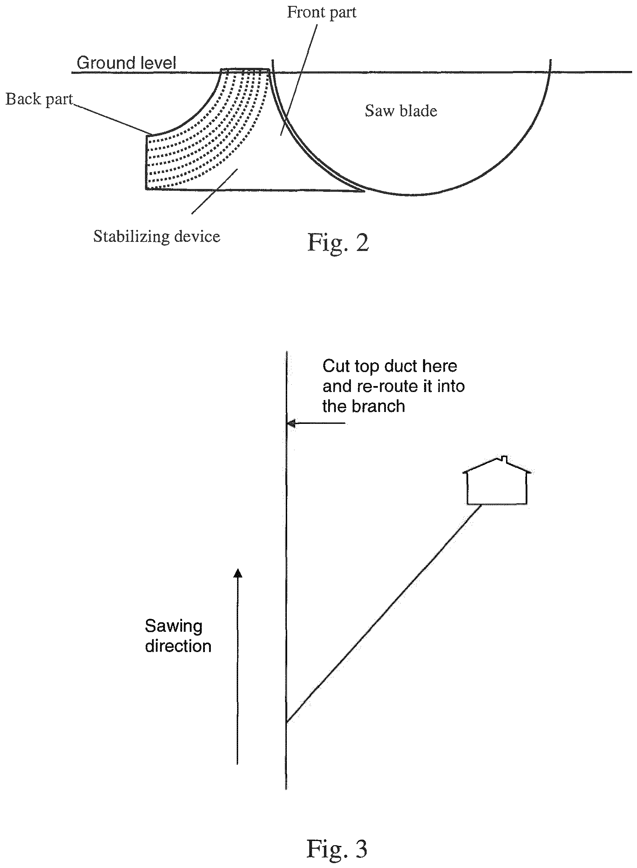

The following is an example embodiment of the work flow for the sawing machine in the present method. The first step for the operator of the sawing machine is to check out the first work orders. The work orders on board the saw-computer are executed using the client of the sawing machine with the following actions:
- The saw-operator is requested to position the sawing machine at the start point the next work order to process. The machine is displayed in real time via the GPS on the screen of the machine. The GPS-system connected to the on-board computer calculates the "direction" of the saw/trenching and displays it on the screen.
- After that the operator is requested to load the proper ducts/cables in correct predefined order in the stabilizing device of the sawing machine.
- The system tells the operator when the sawing machine is on correct start-trench-position and the trenching can start.
- As the trenching is in progress, the sawing machine is moving on the screen and the current minimum distance between calculated/designed trenches compared to actual trench is displayed.
- When the sawing machine enters a trench node, the operator is informed, e.g. there may be a trench branch in the trench-node that has to be marked up on ground.
- When it is time to cut a specific duct, the operator is requested to do so at a specific position (see figure 3) thereby optimal lengths of ducts/cables is cut which reduces cost.
- When the work order is finished, the operator is requested to terminate the trenching and the associated actions.

During trenching, real time digitizing is done via the GPS to register the actual trenching geographical coordinates. If any deviations occur, the operator registers these. When the work order is processed, it gets a new status (done) and the work order is checked/sent back to the Project server via e.g. a web Portal. When the work order is back in the server, the designer gets a request for final adjustment and updates the database. Finally, the planned trench-network (trench-links, trench-nodes) are adjusted using the GPS-calculated geographical coordinates determined during saw-operation.

The system according to the invention, in which the method is implemented, therefore comprises a server unit having computer means, communication means and a first data base which includes positioning data and a plurality of work orders. The system further comprises a sawing machine having computer means and communication means, and other necessary means so as to be arranged for sawing trenches in an area.

The first type of work orders may further comprise information and control data for controlling the sawing machine so that the sawing machine performs its task in an effective and precise way. The work order may e.g. instruct the sawing machine where (i.e. the position) to start and stop an activity: where to raise and lower the saw blade, where to stop for a side cut, when to change saw blade, etc. The activities can be executed manually, automatically or semiautomatically depending on the system entities and activities.

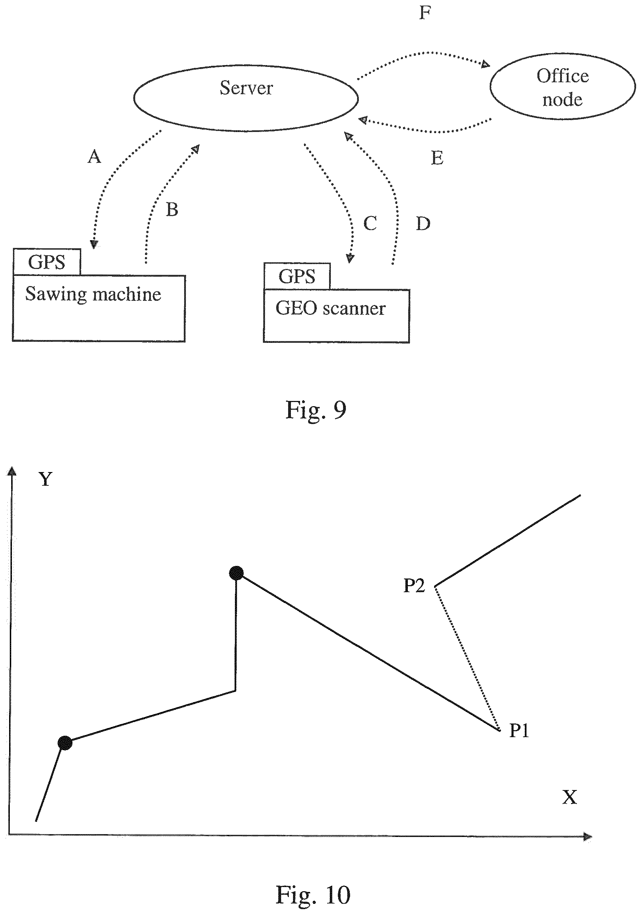

Figure 10 illustrates an example of a work order in X-, Y-coordinates. The lines in the figure illustrates the positions in X-, Y-coordinates where trenches shall be sawn and the black spots indicate where the saw blade should be changed e.g. due to change of road layer from asphalt to concrete. Further, the dotted lines illustrate where the saw blade and the stabilizing device should be raised over ground since no trench shall be sawn in this area (which in this case relates to instructions in Z-coordinates). However, the dotted line marks which way the sawing machine shall move between positions P1 and P2. From position P2 the sawing machine continues producing micro trench.

The communication means are any suitable communication means so that wireless communication systems, such as GSM, UMTS, LTE, etc, can be used, e.g. over the Internet with well known protocols and techniques.

The work orders are related to the positioning data, e.g. the exact position to start and stop an activity, and the work order contains information to an entity/unit in the system which will perform a task. The work order contains information about what should be done, who should do it, when to do it and where it should be done. Each step to be performed may have extended information attached to it depending on the task to be performed.

The first database of the server unit is central to the present system. It contains all work orders regardless of type (first, second, third, fourth, etc), and all information is linked to a work order. The idea is that regardless of the type of work to be undertaken, (scanning, sawing, placing, installing, inspecting, etc.), there is a work order underlying an activity for the entities. The work order is supplemented by various types of information depending on the type of work. For example, for a GEO scanner it may contain the scanned images. For a sawing machine it is supplemented with information about where and how fibre is installed into the sawed trench. For inspections it store values that aggregate rotting in poles, pole tilt, etc. For installations above ground it stores information about what is installed on poles and what route it has from pole to pole, etc. The first database also includes a variety of tables with standard data that the user of the system can choose from to avoid entering data by hand which saves time. In addition, the database of collected positions (coordinates) that informs where the collecting devices, such as sawing machines and GEO scanners, have been. The first data base can further comprise spatial/map data for the mentioned area according to an embodiment of the invention. Spatial/map data can be seen as the information used to build the map image, e.g. lines and symbols and their positions on the map image.

Moreover, data/information collected by various government agencies may be imported to the first database, including: property data from Land Survey, population/demographic data, and road/rail data. In addition, data from the municipality, energy companies and other enterprise and organizations can be imported to the first data base to further facilitate planning and prospecting.

The sawing machine in the system may comprises any suitable means, such as one or more engine means for powering the saw blade and the stabilizing device and/or for driving means (e.g. drive train and wheels), communication means for wireless communication with e.g. a remote server unit, processing/computer means, memory means, sensors, GPS means, vehicle means, display means for displaying information such as graphics, data base means. Information from these means (especially from the different sensors) is recorded and stored, and transmitted as operational data (for the sawing machine) to the server unit and/or to an office client in the second data flow.

Based on the information in the second data flow B, a new first work order may be generated or modified. This makes it possible for the system to use the automatic updated real-time information so as to adapt the process of e.g. sawing trenches and placing ducts/cables. This means that the different activities in the method can be performed on accurate updated information which implies cost reduction and time saving.

As mentioned above, the sawing machine may also comprise a second data base which includes information from the first data base. The second data base can be continuously updated (by means of the communication means) with relevant information from the first data base, or be replicated to the first database of the server unit at start-up and when data needs to be renewed, the latter solution saving communication resources. This is to allow work to proceed even if communication is not possible between the client in the sawing machine and the server unit.

According to yet another embodiment of the invention, the system further comprises a GEO scanner having communication means. The method according to this embodiment therefore further comprises the steps of: transmitting, by the server unit, a third data flow C comprising a second work order to the GEO scanner, scanning, by the GEO scanner, at least a part of the area according to the second work order, transmitting, by the GEO scanner, a fourth data flow D comprising scanning information about the area to the server unit, and updating the first data base with the fourth data flow D. Hence, according to this embodiment, the GEO scanner is controlled by means of the second work order.

The GEO scanner may preferably comprise a positioning receiver so that the fourth data flow D further comprises receipt data corresponding to the second work order and positioning data for the GEO scanner. The positioning data is related to the scanning information and receipt data. With the scanning and positioning information from the GEO scanner, the first data base is kept updated in real time with relevant geological data. Therefore, a first work order may be generated and/or modified based on the fourth data flow D. It should be noted that the first work order may be generated and/or modified based on the second and/or the fourth data flow so as to allow the system to use the latest correct information.

The described embodiment is illustrated in figure 8 in which the GEO scanner is a part of the process for investigating, detecting and documenting existing underground installations. A vehicle mounted ground penetrating radar detects signals that are sent into the ground at an angle in front, behind and just below the GEO scanner. The ground surface is e.g. covered with a width of about one meter. The depth depends on the purpose of the survey. For sawing for fibre installation 1 meter will often be enough, but other depths is possible. The signals from the GEO scanner are complemented by signals from the GPS positioning so that an exact location is stored for scanned images (the ratio of position/scanned image may be adjusted). The signals are filtered, interpreted and processed to give a comprehensible picture of what lies below the ground surface in which the trenches shall be sawn. There may be pipes, cables, paved over manhole covers, etc. The information also shows the state of the ground so that the right saw blade can be used by the sawing machine, e.g. concrete and asphalt needs different types of saw blades.

As with the sawing machine, the GEO scanner may also have a data base of its own, i.e. a third data base, including relevant information from the first data base. The third data base can be continuously updated (by means of communication means) with relevant information from the first data base or updated at start-up and when data have to be renewed.

The system according to the invention may also according to a preferred embodiment comprise an office client. The office client can be implemented in a personal computer (PC) having communication means, such as wired or wireless communication, so that it can interact and communicate with the server unit e.g. by means of a suitable web interface. The method according to this embodiment comprises the steps of: generating and/or modifying, by the office client, a first and/or a second work order. Transmitting, by the office client, a fifth data flow E comprising the generated and/or modified first and/or the second work order to the sawing machine and/or the GEO scanner via the server unit. However, the office client may also generate third and fourth (or any further) work orders to the installer and inspector, respectively.

The office client is connected to a master system, on the server unit that receives and processes data from the different clients, according to the invention for administrating trenching, placing, and other steps in the system. The master system may be used for machine control, fibre documentation in real time, logistics and optimization. The master system controls, monitors and records all activities and events related to the installation with the MTT method. Based on an optimized design different types of work orders are created. These work orders each contain information for different stages of the installation. They contain information about what to be done. For example, where each element will start, which saw blade to be used, how long and to what depth (Z-coordinate) it must be sawed, what is to be installed in the sawed trench, where side tracks are to be cut, etc. When the operator changes the work order status as complete, by transmitting receipt data, information relating to the work orders is transferred from the system entity (e.g. sawing machine) to the server unit where it will be complement the existing information and documentation. In this way an automatic real time documentation system is built which will be updated continuously.

The above embodiment is illustrated in figure 9, in which also a sixth data flow F is illustrated. The present method may therefore also comprise the step of: transmitting, by the server unit, a sixth data flow F comprising the receipt data from the sawing machine and/or GEO scanner to the office client. However, the sixth data flow F can also comprise other information from the second B and fourth D data flows so as to update the office client with information.

Generally, the office client is used to create and modify: work orders, system parameters and spatial/map data. Work orders may be based on system parameters and the work orders may also contain system parameters, examples of system parameters are: different types of installation components, valid status values (e.g. "activity started", "activity finished"), available entities/equipment, personnel, etc. The office client may also be used to monitor the work of sawing machines, GEO scanners and other entities in the system, both visually on the map (displayed on a screen) and by the progress of work orders. The office client has no database of its own, so it stores all data in the first database on the server unit. Since there might be several office clients working with the same data it is important that the data is stored centrally at the server unit and not on different office clients. The data flow from the server unit to the office client contains receipt data and info related to the work orders, and position info from the other entities of the system. The data flow from the office system to the server contains work orders and spatial/map data.

To provide a deeper understanding of the present invention the following description of different embodiments illustrates different flows and activities of the present method.
1. GEO scanner:
   a. The office client creates second work orders for the GEO scanner that are sent to and stored in the first database. The second work orders say in principle: scan this section in this area;
   b. The GEO scanner downloads today's second work orders from the first database at start-up;
   c. The GEO scanner accepts the second work orders and performs them in sequence. Current position from the GPS is sent periodically to the server unit as well as receipt data;
   d. When a second work order is completed data from the scanning is transmitted/ replicated to the first database;
   e. The scanning data from GEO scanner is filtered, interpreted and processed in by the server unit;
   f. Processed scanning data from GEO scanner is stored in usable format in the first database which therefore is updated in this respect.
2. Sawing machine:
   a. The office client creates first work orders for the sawing machine with the help of data from the GEO scanner and the first work orders are sent to and stored in the first data base;
   b. The sawing machine downloads the current first work orders from the first database at start-up;
   c. The attached saw blade ID is verified by the sawing machine;
   d. The sawing machine accepts first work orders and performs them in sequence;
   e. Current positions for the sawing machine from the GPS are sent periodically to the server unit;
   f. When a first work order is completed data and comments (e.g. in the form of receipt data) from the sawing machine is transmitted/replicated to the first database;
   g. If an alarm is triggered, information will be sent to the server unit; an alarm can for example notify that the saw blade is due to be replaced soon.

### Sawing machine and stabilizing device

It has been realized by the inventors that the placement/installation of ducts/cables should preferably be made before the sides of the trench collapses and before stones (or debris) and in particular stones larger than the width of the trench are wedged into the sides of the trench and prevents the installation of the ducts/cables all the way down to the bottom of the trench. By achieving this time (and money) can be saved since the installation can be performed without unnecessary interruptions.

Therefore, a sawing machine is arranged for sawing micro trenches in an area with the present method. In this respect, the machine comprises a saw blade, preferable circular in shape, for sawing/cutting the micro trenches. The produced micro trenches are adapted for receiving ducts/cables which means that the micro trenches have the proper dimensions.

The machine also comprises a stabilizing device arranged for stabilizing the walls of the micro trench when placing ducts/cables, and for this purpose the stabilizing device is positioned immediately behind the saw blade in the micro trench, so that the walls are stabilized until the ducts/cables have be placed/installed by means of guiding means which are also arranged on the stabilizing device.

For stabilizing the walls of the trenches, the stabilizing device comprises suitable elements such as proper side elements which are arranged to "hold up" the walls until the ducts/cables have been installed in the trenches. It is important that the stabilizing device is positioned immediately behind the saw blade so that the trenches sawn by the saw blade are stabilized directly after they are produced so that they do not collapse, or that debris or other dirt fall into the trenches before the ducts/cables have been placed. Therefore, a closest distance between the saw blade and the stabilizing device is larger than 0 mm but less than 10 mm according to an embodiment. The dimension of the stabilizing device is dependent on the size of the ducts/cables, the number of ducts to be placed at the same time, and the depth for placement in the trench. However, the width of the stabilizing device should be slightly less than the width of the sawing blade.

Furthermore, for achieving controlled and automatic placement of the ducts/cables the device has also guiding means which guides the ducts/cables into the trench in a controlled and ordered manner. The combination of stabilization and guiding has proved to reduce cost and time in an effective manner since the process of sawing and installing can be performed at the same time. The guides are arranged on the stabilizing device and hence makes it possible to place the ducts/cables into the trench while the trench is stabilized by the device. The ducts/cables can therefore be placed with high precision into the trench (e.g. on the correct height in the trench) since the trench is "clean" as long as the trench is stabilized by the device.

The stabilizing device may be made of any suitable strong material so that the trenches are stabilized. The material should preferably be rigid, tough, hard and yet flexible so as to withstand stress during operation. The mounting of the stabilizing device to the sawing machine should have an amount of flexibility to prevent damage if the stabilizing device is stuck in the trench. Steel or steel alloys are suitable since they can be given the right properties by alloying with different metals such as platinum and manganese. There is limited space in the trench so the walls of the stabilizing device have to be thin as possible so as to be able to accommodate the passing the ducts/cables but still have the properties mentioned above. Steel alloys in the hardness of about 400-700 Brinell have proved suitable for these applications. It has also been realised that the stabilizing device can be made of moulded carbon fibre. Different parts of the stabilizing device can be cast separately and assembled into a stabilizing device assembly.

According to an embodiment, the device has an inlet and an outlet for ducts/cables, the inlet and outlet being connected to the guiding means. Preferably, the guiding means are channels through which the ducts/cables are guided through the stabilizing device. When in operation, the inlet is preferably above ground and vertically or close to vertically arranged while the outlet is below ground in the trench and horizontally or close to horizontally arranged in order to minimize wear and tear on the ducts/cables. Therefore, a minimum distance between the outlet and the saw blade (at ground level) is slightly longer than the recommended minimum bending radius for the ducts/cables to be installed. This normally translates to somewhere between 100 to 500 mm measured at ground level, but other distances are possible. Further, the inlet, outlet and guiding means may together be removably attached on the stabilizing device e.g. in the form of a removable cassette. By having a removable cassette for the guiding means, the installation time shortens in some cases as the time-consuming task of inserting many ducts/cables into their respective channels may be avoided

It has also been realized by the inventors that an operating depth for the stabilizing device in the micro trench should be up to 50 mm less than an operating depth for the saw blade according to an embodiment. This difference in depth between the saw blade and the stabilizing device, when in operation, decides how quickly the ground level may change (i.e. goes down). The saw blade must have sawed the trench deep enough so that the stabilizing device never touches the bottom of the trench in order to avoid the possibility of the stabilizing device sticking to the ground. This avoids unnecessary forces on the stabilizing device and possible breakage. This may happen when the ground level suddenly becomes lower.

Moreover, according to yet another embodiment, the stabilizing device and the saw blade are arranged to be elevated and lowered independently of each other. This is advantages when for example the saw blade has to be changed due to wear or when another type of saw blade is needed (e.g. one type for asphalt and another type for concrete). Further, the stabilizing device may have to be replaced which may easily be performed if the two parts can be lowered and elevated independently of each other. Also, during shorter interruptions in the sawing operation the sawing blade is elevated, but the stabilizing device must remain in the ground, since the need for stabilization of the trench still exists. However, the stabilizing device and the saw blade may further be arranged to together be elevated and lowered, e.g. when underground infrastructure is encountered both parts can be elevated so as to avoid damage.

The stabilizing device is preferably mounted separately on the sawing machine by means of a number of movable axes for elevation and lowering. The movable axes may be powered by a dedicated engine for this specific purpose. Further, the sawing machine may have on its left and right sides (in the sawing direction) attachments means and driving means for both the stabilizing device and the saw blade. Thereby, any of the left or right sides of the sawing machine can be used for sawing and placing ducts/cables which may be necessary due to hindering infrastructure, traffic situation in the area, etc.

Figure 9 shows an embodiment of a machine. The stabilizing device has a front part and a back part, wherein the front part is located immediately behind the saw blade. It can also be seen that the stabilizing device has a section at the front part that has a shape that is complementary to the shape of the saw blade, which in this particular case is circular. Thus, in case the section at the front part has a concave circular shape with the same radius, or close to the same radius, as the saw blade and is placed as close as possible and less than 10 mm away from the saw blade. The reason for this is that the underground part of the stabilizing device must be arranged so close to the saw blade such that it is virtually impossible for dirt, stones and other debris to fall to the bottom of the trench, or wedge between the sides of the trench. The guiding means in this embodiment are guiding channels inside the stabilizing device. The channels are illustrated with dotted lines in the figures.

Further, the back part of the stabilizing device where the outlet is arranged may have different preferred shapes. One shape is substantially parallel to the complementary shape of the front section described above. Another shape is substantially opposite to the complementary shape, and a third embodiment defines a shape for the back part which is substantially diagonal from the base to the top of the back part in the backwards direction. These embodiments are shown in figures 11-13. It is further to be noted that the inlet, outlet and channels are arranged on the back part of the stabilizing device in this embodiment. The stabilizing device may also be axe shaped in cross section at the front part in the forward direction.

Preferably, as mentioned above the stabilizing device has a maximum width in cross section that is equal to or slightly less than a width for the saw blade. The stabilizing device must be wide enough to have room for the ducts/cables to be installed, but small enough so that it can be drawn along the sawed trench.

Another important aspect is that with the use of guiding means an order of a plurality of ducts/cables is preserved when placed in the micro trench. This is very important when more than one duct is placed at the same time. In one installation scenario, the duct/cable for a certain house is cut at a certain distance after the house. It is important that this duct/cable is one of the ducts/cables on top of the pile of ducts/cables in the trench, so that it can be easily found. The duct/cable must be cut before the stabilizing device. Therefore, it is important to know which one of all ducts/cables that enters the stabilizing device will come out on top in the trench. Moreover, as the colour of the duct/cable for a certain house is in many cases decided before the sawing begins, the order of the ducts/cables must be arranged so that the duct/cable with correct colour comes out on top, cut to the correct length, in the trench when that particular house is passed.

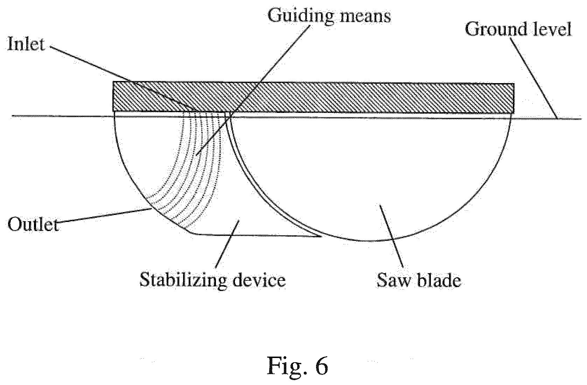

A method which allows the placement of a plurality of ducts/cables at the same time has a very high commercial value since the process of placement can be performed much faster than what has previously been known in the art. Therefore, according to this embodiment, the stabilizing device has a plurality of guiding means each guiding one or a few ducts/cables into the trench. For example, the device may comprise a plurality of channels so arranged that a known order is preserved, which means that an order of the ducts/cables out of the stabilizing device is known form the order of ducts/cables into the stabilizing device, hence the order into and out of the stabilizing device is related and known. This can e.g. be achieved by a one-to-one mapping between the inlet and the outlet of the device. The order of the ducts/cables should be arranged in such a way that one of the ducts/cables on top of the pile of ducts/cables in the trench is always the one to be routed to the next location. Therefore, a downmost duct/cable entering the inlet will be an uppermost duct/cable out from the outlet, and the uppermost duct/cable entering the inlet will be a downmost duct/cable out from the outlet. The branching micro trenches may be sawn before the main trench as shown in figure 6 and 7 or the branching micro trenches may be sawn after the main trench is sawn. The particular order in which the trenches are sawn may be decided to achieve the best flow during the installation. Each branching micro trench goes to a final location for one of the ducts/cables from the main micro trench. When the main trench is sawn and the ducts/cables are installed, the uppermost duct/cable is cut (before it enters the stabilizing device) at a certain distance beyond the location of the respective branching trench, so that that duct/cable can be lifted and routed to the final location for that duct/cable, see figure 10. If the cut is made correctly the length of the duct/cable will be sufficient so that the duct/cable is long enough to reach the final location without splicing. In this way the ducts/cables are one by one routed to each passed location through the branches.

Depending on the width of the trench and the size of the ducts/communication cables there may be one or more ducts/communication cables side by side as the uppermost ducts/communication cables in the main trench. It is important that the duct/cable next to be routed to its final location is always one of the ones on top. To achieve this is, when cutting the main trench and placing a number of ducts/cables, to cut one of the uppermost ducts/communication cables, the one designated to this specific location, at a certain distance after passing the corresponding branching trench, so that the cut duct/cable can be lifted and routed through that branching micro trench to its final location. The duct/cable should be cut at a certain minimum distance after passing the corresponding branching trench, so that, when lifted from the main trench and routed towards its final location, the length is sufficient to reach the final location without splicing.

If the stabilizing device (formerly also known as "plough") is designed with individual channels for the ducts/cables or with individual channels, each with room for a few ducts/cables, it is easy to know which duct/cable will be on top in the trench and thereby which duct/cable should be cut before the stabilizing device. Example of such stabilizing device is shown in Figure 9. The stabilizing device in this embodiment has a duct/cable inlet and a duct/cable outlet which is connected to each other by means of a plurality of channels as guiding means (illustrated with dotted lines) for the ducts/cables. The underground outlet of the stabilizing device may in an embodiment comprise a "matrix" (or vector) part so arranged that the channels are arranged in a matrix with *n* row and *m* columns, thereby in a controlled way horizontally and/or vertically separating the ducts/cables when placing them in the micro trench.

So in summery, one after the other, cutting one of the uppermost ducts/communication cables, which one is designated to a certain location, at a certain minimum distance after each branch and thereafter lifting this duct/communication cable from the main trench and routing it to its final location through the branch.

The machine may further comprise at least one drum arranged for holding the ducts/communication cables before placing them into the micro trench via the stabilizing device. In this way easy access to the ducts/cables is achieved.

Further, the machine may also comprises other suitable means, such as: one or more engine means for powering the saw blade and the stabilizing device and/or for driving means (e.g. drive train and wheels), communication means for wireless communication with e.g. a remote server unit, processing/computer means, memory means, sensors, GPS means, vehicle means, display means for displaying information such as graphics, data base means, reading means for reading mechanical coding means on the saw blade, immobilizer, etc.

Regarding the driving of the saw blade and/or the stabilizing device this can e.g. be performed by means of direct mechanical driving, hydraulic driving and electric driving. The mechanical driving gives the highest power transmission ration while the electrical driving gives the lowest, so the former is preferred if high power is needed which often is the case.

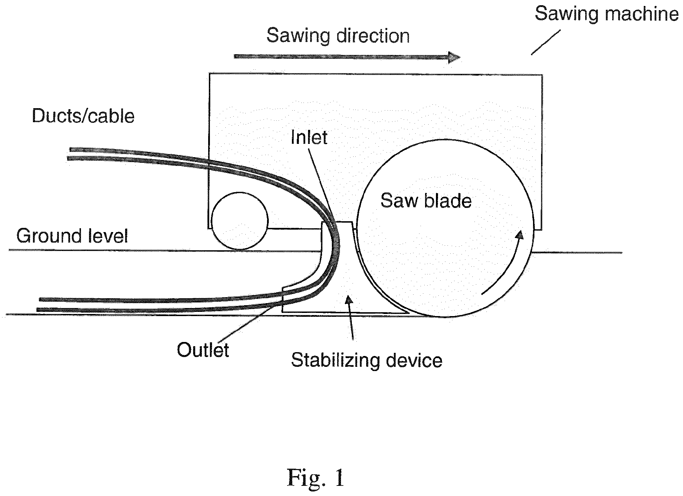

According to yet another embodiment the saw blade is coated/covered with diamonds (not shown in figure 1), and is available in several different configurations dependent on ground and surface material and desired cut depth and width. Currently the ratio width is maximized to 40 mm and the depth of 600 mm. For fibre, 25 mm wide and 400 mm deep is used in the normal case. Hence, the saw blade for sawing micro trenches is arranged for depths between 10 to 600 mm and widths between 5 to 25 mm according to a preferred embodiment.

According to another embodiment the rotation of the saw blade is counter clockwise so that material is transported up in front of the saw and can be collected in a container that is mounted in front of the saw blade. The counter clockwise rotation of the saw blade also means that less debris is left in the micro trench.

The saw blade may further be cooled with water, and may be monitored by sensors that give indications of heat (sensor), wobbling (gyro), speed (tachometer), saw pressure (sensor) and wear (sensor). The wear of the saw blade can be determined by analysing wave signals from the sound of the saw blade in operation.

Software that indicates and addresses emerging sensor deflection is installed in the machines on board computer (i.e. computer means). Heat and wobbling are the most common reasons for saw blade damage. The saw blade is stopped and lifted automatically at given parameters in order to avoid a breakdown.

Further, the saw blade need be applied against the ground absolutely vertically during the process to prevent wobbling and uneven wear. A gyro monitor so that this happens, the software in the on-board computer verify that the application is kept within given parameters, and terminates automatically upon failure.

Saw blade speed for best results should be smooth. Deviations from given parameters are handled by the software in the on-board computer.

Saw pressure is related to the solid nature of the ground material and the speed at which the machine is driven forward. Sensors and control systems monitor the relationship between the saw blade pressure and speed of the driving wheels and the software automatically control relations between these two.

With unique identity ID labelling, all the above information and any deviation singled out geographically in X-, Y-, and Z-coordinates can be linked to each separate saw blade.

Furthermore, as understood by the person skilled in the art, any method according to the present invention may also be implemented in a computer program, having code means, which when run by processing means causes the processing means to execute the steps of the method. The computer program is included in a computer readable medium of a computer program product. The computer readable medium may comprises of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Finally, it should be understood that the present invention is not limited to the embodiments described above, but also relates to and incorporates all embodiments within the scope of the appended independent claims. The invention at least relates to the following embodiments.
A1. Method for placement of ducts/cables in a geographical area, said method using a topology comprising one or more links and one or more nodes;
   - each node being a starting point and/or an end point for a link, and each node being associated with information about which links said node is connected to,
   - each link representing a trench and having a starting point and an end point connected to a node, respectively, and each link being associated with information about which nodes said link is connected to; said method comprising the step of:
   - placing links in a representation of a geographical area and interconnecting said links by means of nodes so as to generate a topology comprising of nodes and links; and
   - using said topology for placement of ducts/cables in said geographical area.
A2. Method according to A1, wherein said step of using involves:
   - using said associated information of said nodes and links for projecting placement of ducts/cables in said geographical area.
A3. Method according to A1 or A2, wherein said step of using involves:
   - indicating a first node and a second node of said topology; and
   - generating a shortest route between said first and second nodes via one or more nodes and one or more links of said topology.
A4. Method according to A3, wherein said step of generating said shortest route is performed by means of an optimisation algorithm.
A5. Method according to A4, further comprising the step of:
   - generating at least one first work order for a sawing machine based on said shortest route; and
   - transmitting a first data flow (A) comprising said first work order to said sawing machine, said sawing machine having computer means and communication means, and being arranged for sawing trenches.
A6. Method according to A5, further comprising the steps of:
   - receiving, by said sawing machine, said first data flow (A) comprising said first work order; and
   - sawing, by said sawing machine, trenches according to said first work order.
A7. Method according to A6, wherein said first work order comprises positioning data.
A8. Method according to A7, wherein said first work order further comprises information about: number of ducts/cables to be placed, an internal order of said ducts/cables, and where said ducts/cables should be cut.
A9. Method according to any of A5-A8, wherein said first work order is provided by a device comprising: a server unit having computer/processing means, communication means and a first data base, said first data base including positioning data.
A10. Method according to any of A5-A9, wherein said sawing machine further comprises a positioning receiver, and said method further comprises the steps of:
   - transmitting, by said sawing machine, a second data flow (B) comprising positioning data for said sawing machine to said server unit, and
   - updating said first data base with said second data flow (B).
A11. Method according to any of A1-A10, wherein each node further is associated with information about main trenches and branch trenches said node is connected to.
A12. Computer program, **characterised in** code means, which when run by processing means causes said processing means to execute said method according to any of A1-A11.
A13. Computer program product comprising a computer readable medium and a computer program according to A12, wherein said computer program is included in the computer readable medium, and comprises of one or more from the group: ROM (Read-Only Memory), PROM (Programmable ROM), EPROM (Erasable PROM), Flash memory, EEPROM (Electrically EPROM) and hard disk drive.
B1. Device for planning placement of ducts/cables in a geographical area, said device comprising a server unit having input means, computer/processing means, communication means and a first data base, said first data base including positioning data; said device being arranged to use a topology comprising one or more links and one or more nodes;
   - each node being a starting point and/or an end point for a link, and each node being associated with information about which links said node is connected to,
   - each link representing a trench and having a starting point and an end point connected to a node, respectively, and each link being associated with information about which nodes said link is connected to; said device further being arranged to:
   - receive input comprising instructions;
   - place links in a representation of a geographical area and interconnecting said links by means of nodes so as to generate a topology comprising of nodes and links based on said instructions; and
   - use said topology for placement of ducts/cables in said geographical area.
B2. System comprising at least one device according to B1 and at least one sawing machine, said sawing machine having computer means and communication means, and being arranged for sawing trenches.

## Claims

1. Method for placement of ducts/cables in a geographical area, said method using a topology comprising one or more links and one or more nodes; each node being a starting point and/or an end point for a link, and each node being associated with information about which links said node is connected to, each link representing a trench and having a starting point and an end point connected to a node, respectively, and each link being associated with information about which nodes said link is connected to; said method comprising the steps of:
- placing links in a representation of a geographical area and interconnecting said links by means of nodes so as to generate a topology comprising of nodes and links;
- indicating a first node and a second node of said topology;
- generating a shortest route, by means of an optimisation algorithm, between said first and second nodes via one or more nodes and one or more links of said topology; **characterised by**
- generating at least one first work order for a sawing machine based on said shortest route, wherein said first work order comprises positioning data and information about: number of ducts/cables to be placed, an internal order of said ducts/cables, or where said ducts/cables should be cut;
- transmitting a first data flow (A) comprising said first work order to said sawing machine, said sawing machine having computer means and communication means, and being arranged for sawing trenches;
- receiving, by said sawing machine, said first data flow (A) comprising said first work order;
- sawing, by said sawing machine, trenches according to said first work order; and
- placing, by said sawing machine, ducts/cables in said trenches according to said first work order.

2. Method according to claim 1, wherein said step of using involves:
- using said associated information of said nodes and links for projecting placement of ducts/cables in said geographical area.

3. Method according to any of the preceding claims, wherein said first work order is provided by a device comprising: a server unit having computer/processing means, communication means and a first data base, said first data base including positioning data.

4. Method according to claim 3, wherein said sawing machine further comprises a positioning receiver, and said method further comprises the steps of:
- transmitting, by said sawing machine, a second data flow (B) comprising positioning data for said sawing machine to said server unit, and
- updating said first data base with said second data flow (B).

5. Method according to claim 4, further comprising the step of
- updating said first work order based a content of the second data flow (B).

6. Method according to any of the proceeding claims, wherein each node further is associated with information about main trenches and branch trenches said node is connected to.

7. Method according to any of the proceeding claims, further comprising the steps of
- transmitting, by the server unit, a third data flow (C) comprising a second work order to a GEO scanner;
- scanning, by the GEO scanner, at least a part of the area according to the second work order;
- transmitting, by the GEO scanner, a fourth data flow (D) comprising scanning information about the area to a server unit comprising a first data base;
- updating the first data base with the fourth data flow (D).

8. Method according to claim 7, further comprising the step of:
- updating said first work order based a content of the fourth data flow (D).

9. Computer program, **characterised in** code means, which when run by processing means causes said processing means to execute said method according to any of the preceding claims.

10. Computer program product comprising a computer readable medium and a computer program according to claim 9, wherein said computer program is included in the computer readable medium, and comprises of one or more from the group: ROM (Read-Only Memory), PROM (Programmable ROM), EPROM (Erasable PROM), Flash memory, EEPROM (Electrically EPROM) and hard disk drive.

## Patentansprüche

1. Methode für die Verlegung von Kanälen/Kabeln in einem geografischen Bereich, wobei besagte Methode eine Topologie bestehend aus einem oder mehreren Links und einem oder mehreren Knoten verwendet; jeder Knoten ist ein Start- und/oder Endpunkt eines Links und jeder Knoten ist assoziiert mit Informationen darüber, welche Links mit diesem Knoten verbunden sind, jeder Link stellt einen Graben dar und besitzt einen jeweils mit einem Knoten verbundenen Start- und Endpunkt und jeder Link ist assoziiert mit Informationen darüber, welche Knoten mit diesem Link verbunden sind. Die besagte Methode besteht aus folgenden Schritten:
- Platzierung von Links in eine Darstellung eines geografischen Bereichs und Verbindung dieser Links unter Zuhilfenahme von Knoten, um eine aus Knoten und Links bestehende Topologie zu erzeugen;
- Bezeichnung eines ersten und eines zweiten Knotens der besagten Topologie;
- Erzeugung der kürzesten Route, mithilfe eines Optimierungsalgorithmus, zwischen besagtem ersten und zweiten Knoten über einen oder mehrere Knoten und einen oder mehrere Links der Topologie; charakterisiert durch:
- Erzeugung mindestens eines ersten Arbeitsauftrags für eine Sägemaschine auf Basis besagter kürzester Route, wobei dieser erste Arbeitsauftrag neben Positionierungsdaten auch Informationen umfasst über: Anzahl der zu platzierenden Kanäle/Kabel, einen internen Auftrag für diese Kanäle/Kabel oder wo die Kanäle/Kabel zu trennen sind;
- Übertragung eines ersten Datenflusses (A) bestehend aus diesem ersten Arbeitsauftrag an die besagte Sägemaschine, wobei diese Sägemaschine über Computer- und Kommunikationsmittel verfügt und für das Sägen von Gräben eingerichtet ist;
- Empfang dieses ersten Datenflusses (A) mit besagtem ersten Arbeitsauftrag durch besagte Sägemaschine;
- Sägen der Gräben gemäß dem ersten Arbeitsauftrag durch besagte Sägemaschine und
- Platzierung von Kanälen/Kabeln in besagten Gräben gemäß dem ersten Arbeitsauftrag durch besagte Sägemaschine.

2. Methode entsprechend Anspruch 1, wobei der besagte Schritt Folgendes umfasst:
- Nutzung besagter assoziierter Informationen der besagten Knoten und Links für die Planung der Platzierung von Kanälen/Kabeln in besagtem geografischen Bereich.

3. Methode entsprechend einem der vorhergehenden Ansprüche, wobei besagter erster Arbeitsauftrag von einem Gerät bereitgestellt wird, das Folgendes umfasst: eine Servereinheit, die Computer-/Verarbeitungsmittel, Kommunikationsmittel und eine erste Datenbank besitzt, wobei besagte erste Datenbank Positionierungsdaten enthält.

4. Methode entsprechend Anspruch 3, wobei besagte Sägemaschine außerdem einen Positionierungsempfänger besitzt und besagte Methode außerdem folgende weitere Schritte umfasst:
- Übertragung (durch besagte Sägemaschine) eines zweiten Datenflusses (B) bestehend aus Positionierungsdaten für besagte Sägemaschine an besagte Servereinheit und
- Aktualisierung besagter erster Datenbank mit besagtem zweiten Datenfluss (B).

5. Methode entsprechend Anspruch 4, wobei des Weiteren der folgende Schritt enthalten ist
- Aktualisierung besagten ersten Arbeitsauftrags auf Basis von Inhalt des zweiten Datenflusses (B).

6. Methode entsprechend einem der vorhergehenden Ansprüche, wobei jeder Knoten des Weiteren assoziiert ist mit Informationen über Haupt- und Nebengräben, mit denen der besagte Knoten verbunden ist.

7. Methode entsprechend einem der vorhergehenden Ansprüche, wobei des Weiteren folgende Schritte enthalten sind
- Übertragung (durch die Servereinheit) eines dritten Datenfluss (C) bestehend aus einem zweiten Auftrag an einen GEO-Scanner;
- Scannen (durch den GEO-Scanner) mindestens eines Teils des Bereichs gemäß dem zweiten Arbeitsauftrag;
- Übertragung (durch den GEO-Scanner) eines vierten Datenflusses (D) bestehend aus Scandaten über den Bereich an eine Servereinheit mit einer ersten Datenbank;
- Aktualisierung der ersten Datenbank mit dem vierten Datenfluss (D).

8. Methode entsprechend Anspruch 7, wobei des Weiteren der folgende Schritt enthalten ist.
- Aktualisierung besagten ersten Arbeitsauftrags auf Basis von Inhalt des vierten Datenflusses (D).

9. Computerprogramm, charakterisiert durch Codierungsmittel, das, wenn es durch Verarbeitungsmittel ausgeführt wird, besagte Verarbeitungsmittel zur Ausführung besagter Methode gemäß einem der vorhergehenden Ansprüche veranlasst.

10. Computerprogramm-Produkt besteht aus einem computerlesbaren Medium und einem Computerprogramm gemäß Anspruch 9, wobei besagtes Computerprogramm in dem computerlesbaren Medium inbegriffen ist und mindestens ein Element aus der Gruppe enthält: ROM (Lesespeicher), PROM (Programmierbares ROM), EPROM (Löschbares PROM), Flash-Speicher, EEPROM (Elektrisches EPROM) und Festplattenlaufwerk.

## Revendications

1. Procédé de placement de conduits/câbles dans une zone géographique, ledit procédé utilisant une topologie comprenant une ou plusieurs liaisons et un ou plusieurs noeuds ; chaque noeud étant un point de départ et/ou un point final pour une liaison, et chaque noeud étant associé à des informations sur les liaisons auxquelles ledit noeud est connecté, chaque liaison représentant une tranchée et ayant un point initial et un point final respectivement connectés à un noeud, et chaque liaison étant associée aux informations sur quels noeuds ladite liaison est connectée, ledit procédé comprenant les étapes de :
- placer des liens dans une représentation d'une zone géographique et interconnecter lesdits liens au moyen de noeuds de manière à générer une topologie comprenant des noeuds et des liens ;
- indiquant un premier noeud et un second noeud de ladite topologie ;
- générer un chemin le plus court, au moyen d'un algorithme d'optimisation, entre lesdits premier et second noeuds via un ou plusieurs noeuds et une ou plusieurs liaisons de ladite topologie ; **caractérisé par** :
- générer au moins un premier ordre de travail pour une machine à scier sur la base dudit trajet le plus court, dans lequel ledit premier ordre de travail comprend des données de positionnement et des informations sur : le nombre de conduits/câbles à placer, un ordre interne desdits conduits/câbles, ou où lesdits conduits/câbles doivent être coupés ;
- transmettre un premier flux de données (A) comprenant ledit premier ordre de travail à ladite machine à scier, ladite machine à scier ayant des moyens informatiques et des moyens de communication, et étant disposée pour scier des tranchées ;
- recevoir, par ladite machine de sciage, ledit premier flux de données (A) comprenant ledit premier ordre de travail ;
- scier, par ladite machine à scier, des tranchées selon ledit premier ordre de travail ; et
- la mise en place, par ladite machine à scier, de conduits/câbles dans lesdites tranchées selon ledit premier ordre de travail.

2. Procédé selon la revendication 1, dans lequel ladite étape d'utilisation implique :
- l'utilisation desdites informations associées desdits noeuds et liaisons pour projeter l'emplacement des gaines/câbles dans ladite zone géographique.

3. Procédé selon l'une quelconque des revendications précédentes, dans lequel ledit premier ordre de travail est fourni par un dispositif comprenant : une unité serveur ayant des moyens informatiques/de traitement, des moyens de communication et une première base de données, ladite première base de données comprenant des données de positionnement.

4. Procédé selon la revendication 3, dans lequel ladite machine à scier comprend en outre un récepteur de positionnement, et ledit procédé comprend en outre les étapes consistant à :
- transmettre, par ladite machine à scier, un second flux de données (B) comprenant des données de positionnement pour ladite machine à scier à ladite unité serveur, et
- la mise à jour de ladite première base de données avec ledit second flux de données (B).

5. Procédé selon la revendication 4, comprenant en outre l'étape consistant à
- la mise à jour dudit premier bon de travail sur la base d'un contenu du second flux de données (B).

6. Procédé selon l'une quelconque des revendications précédentes, dans lequel chaque noeud est en outre associé à des informations sur les tranchées principales et les tranchées de branche auxquelles ledit noeud est connecté.

7. Procédé selon l'une quelconque des revendications de la procédure, comprenant en outre les étapes consistant à
- transmettre, par l'unité serveur, un troisième flux de données (C) comprenant un deuxième ordre de travail à un scanner GEO ;
- le balayage, par le scanner GEO, d'au moins une partie de la zone selon le deuxième bon de travail ;
- transmettre, par le scanner GEO, un quatrième flux de données (D) comprenant le balayage d'informations sur la zone à une unité serveur comprenant une première base de données ;
- la mise à jour de la première base de données avec le quatrième flux de données (D).

8. Procédé selon la revendication 7, comprenant en outre l'étape consistant à :
- la mise à jour dudit premier bon de travail sur la base d'un contenu du quatrième flux de données (D).

9. Programme d'ordinateur, **caractérisé par** des moyens de code qui, lorsqu'il est exécuté par des moyens de traitement, amène lesdits moyens de traitement à exécuter ledit procédé conformément à l'une quelconque des revendications précédentes.

10. Produit de programme d'ordinateur comprenant un support lisible par ordinateur et un programme d'ordinateur selon la revendication 9, dans lequel ledit programme d'ordinateur est inclus dans le support lisible par ordinateur, et comprend un ou plusieurs éléments du groupe : ROM (mémoire morte), PROM (ROM programmable), EPROM (PROM effaçable), mémoire flash, EEPROM (EPROM électrique) et disque dur.
